(19) Europäisches Patentamt
European Patent Office
Office européen des brevets

(11) EP 1 116 773 B1

(12) **EUROPEAN PATENT SPECIFICATION**

(45) Date of publication and mention of the grant of the patent:
**19.11.2003 Bulletin 2003/47**

(21) Application number: **99938584.2**

(22) Date of filing: **23.08.1999**

(51) Int Cl.[7]: **C09K 21/12**, C08K 5/5317, C08K 5/51, C08K 3/22, C08K 3/32, C08L 101/00

(86) International application number:
**PCT/JP99/04525**

(87) International publication number:
**WO 00/011109 (02.03.2000 Gazette 2000/09)**

(54) **FLAME RETARDANT COMPOSITION AND FLAME-RETARDANT RESIN COMPOSITION**

FLAMMENHEMMENDE ZUSAMMENSETZUNG UND FLAMMENHEMMENDE HARZZUSAMMENSETZUNG

COMPOSITION IGNIFUGE ET COMPOSITION DE RESINE IGNIFUGE

(84) Designated Contracting States:
**DE FR GB IE**

(30) Priority: **24.08.1998 JP 25177998**

(43) Date of publication of application:
**18.07.2001 Bulletin 2001/29**

(73) Proprietor: **NIPPON CHEMICAL INDUSTRIAL COMPANY LIMITED**
**Tokyo 136-8515 (JP)**

(72) Inventors:
- **HARA, Yoshifusa Nippon Chem. Ind. Co. Ltd.**
**Koto-ku, Tokyo 136-8515 (JP)**
- **TAMURA, Ken, Nippon Chem. Ind. Co. Ltd.**
**Koto-ku, Tokyo 136-8515 (JP)**
- **NISHIMURA, Takashi,**
**Nippon Chem. Ind. Co. Ltd.**
**Koto-ku, Tokyo 136-8515 (JP)**
- **MATSUMOTO, Nobuo,**
**Nippon Chem. Ind. Co. Ltd.**
**Koto-ku, Tokyo 136-8515 (JP)**

(74) Representative: **HOFFMANN - EITLE**
**Patent- und Rechtsanwälte**
**Arabellastrasse 4**
**81925 München (DE)**

(56) References cited:

| | |
|---|---|
| **FR-A- 2 707 308** | **JP-A- 5 004 997** |
| **JP-A- 7 258 479** | **JP-A- 48 077 689** |
| **JP-A- 51 091 302** | **US-A- 5 684 071** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Technical Field

The present invention relates to a non-halogen base flame retardant composition and a flame-retardant resin composition having smoke suppression properties, emits no irritating odor, and is able to impart superior flame retardancy to various resins while maintaining a inherent mechanical properties of the resins.

### Background Art

As flame retardants for plastics, halides of chlorine, bromine, etc., phosphorus base compounds, nitrogen base compounds, or antimony and boron based inorganic compounds have been used.

In recent years, however, the levels of flame retardancy required have become stricter in every field, and high flame retardancy has being demanded. In particular, since it was pointed out that flame retardants containing bromine or chlorine have the possibility of generating dioxins in very small amounts which are still poisonous to humans during combustion, the need for non-halogen base flame retardants has intensified.

As non-halogen base flame retardants, regarding a thermosetting resin for example, a resin composition, in which red phosphorus is blended, (Japanese Patent Publication No. 59-49942), hydrated alumina (Japanese Patent Application Laid-open No. 05-25369), surface treated red phosphorus, hydrated alumina, silica powder (Japanese Application Laid-open No.. 58-198521), and reformed red phosphorus (Japanese Patent Application Laid-open No. 63-156860) as a flame retardant for an epoxy resin, calcium borate and aluminum hydroxide or magnesium hydroxide (Japanese Patent Application Laid-open No. 05-43774) for a phenol resin, boric acid and antimony dioxide (Japanese Patent Application Laid-open No. 60-81244) for a phenol resin, and a compound having three triazine structures in a molecule (Japanese Patent Application Laid-open No. 53-21241) for a polyurethane resin, have been proposed.

On the other hand, regarding a thermoplastic resin, flame retardants, for example, magnesium hydroxide (Japanese Patent Application Laid-open No. 54-83952 and Japanese Patent Application Laid-open No. 54-131645) and melamine cyanurate (Japanese Patent Application Laid-open No. 53-31759 and Japanese Patent Application Laid-open No. 54-91558) for a polyamide resin, an organic sulfonate (Japanese Patent Application Laid-open No. 50-98539 and Japanese Patent Application Laid-open No. 50-98540) and sulfimide acid salt (Japanese Paten Publication No. 01-22304) for a poly carbonate resin, a phosphonate compound and ammonium polyphosphate (Japanese Patent Application Laid-open No. 52-86449) and a phosphate compound and antimony trioxide (Japanese Patent Application Laid-open No. 49-32947) for polyphenylene oxide, and polyphosphonate (US Patent No. 3719727) for a polyester, have been proposed.

Since red phosphorus is, however, reddish brown, resins are colored by red phosphorus so that coloring is impossible. Furthermore, working environments become worse due to generation of phosphine gas during thermal processing and incineration of resins. In order to suppress this, for example, red phosphorus is covered with a covering agent, but the generation of phosphine gas cannot be completely prevented.

In other flame retardants, it is also difficult to impart superior flame retardancy to various resins without degrading color tones, mechanical properties of the resins, and there are problems of smoke and irritating odor generation during combustion.

Organic phosphorus base flame retardants are particularly notable as non-halogen base flame retardants. The mechanism of its flame retardation is that in high volatile flame retardants, thermally vaporized phosphorus compounds retard combustion of plastics as flame retardants in gas phase by an effect of diluting gaseous oxygen, an effect of cooling combustion system due to vaporization, and an effect of suppressing chemical reactions of combustion, etc. On the other hand, in less volatile flame retardants, phosphoric acid is produced by thermal cracking due to heating, and this becomes metaphosphoric acid and polymetaphosphoric acid so as to form a nonvolatile phosphoric acid polymer on a surface of a solid phase or fused layer of the burning plastic. In addition, the plastic is carbonized by the dehydration reaction of phosphoric acid so as to form a carbonized layer to thereby cut off the access of air, and the supply of external thermal energy so as to retard combustion.

Hitherto, as organic phosphorus base flame retardants, various kinds of phosphoric esters and phosphite bases have been proposed, but most of those compounds are, watersoluble so as to have low affinity with resins. Furthermore, since those compounds have low phosphorus content, in order to increase the flame retardant effect, resins must contain large amounts of those compounds so that mechanical properties are degraded.

Nitrilotris(methylene)phosphonic acid and derivatives thereof are used in various areas as scale inhibitors, anticorrosives, metallic surface treating agents, and chelating agents. In Japanese Application Laid-open No. 05-4997, it is disclosed that nitrilotris(methylene)phosphonic acid 6 melamine salt is superior flame-retardant compound. The resins, in which the aforementioned compound is blended as a flame retardant, exhibit some flame retarding effect. When the compound is used alone, however, the flame retarding effects are still insufficient in practice, and furthermore,

mechanical properties of the resin are degraded.

It has been known that some kind of flame retardant show greater retarding effects when they are used together with another retarding agent than they are used alone due to a synergetic effect. For example, combinations of halogen-containing retardant and phosphorus-containing retardant, $Sb_2O_3$ and halogen-containing retardant, and halogen-containing retardant and organic peroxide have been known.

In consideration of the aforementioned problems, the inventors of the present invention earnestly investigated non-halogen base flame retardants and as a result, noted nitrilotris(methylene)phosphonic acid that has a high phosphorus content, and discovered that a retardant comprising, as effective components, a melamine salt of the aforementioned compound and inorganic retardant could impart superior flame retardancy to various resins without degrading mechanical properties so as to complete the present invention.

That is, objects of the present invention are to provide a non-halogen base flame retardant composition which can impart superior flame retardancy to various resins without degrading mechanical properties, generating irritating fume and smoke and to provide a resin composition having superior flame retardancy.

Disclosure of Invention

The present invention aims to provide a flame retardant composition characterized by containing a nitrilotris-(methylene)phosphonic acid melamine salt represented by the following general formula (1) :

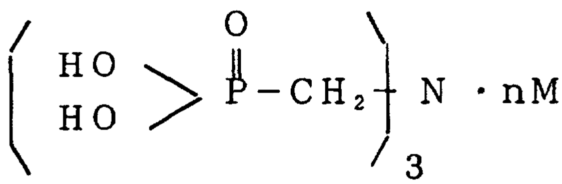

(1)

(wherein M represents a melamine and n is an integer from 1 to 6), and hydrated metal compound.

The present invention also aims to provide a flame-retardant resin composition constitutionally characterized in containing a resin and the aforementioned flame retardant composition.

Best Mode for Carrying Out the Invention

The present invention will be explained below in detail.

A flame retardant composition according to the present invention is characterized by containing a nitrilotris-(methylene)phosphonic acid melamine salt represented by the following general formula (1):

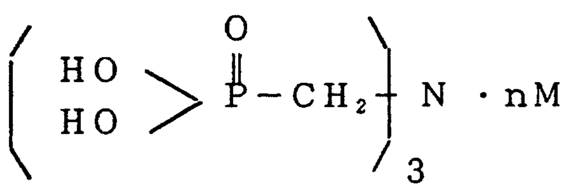

(1)

and hydrated metal compound.

As specific examples for the nitrilotris(methylene)-phosphonic acid melamine salt represented by the general formula (1): nitrilotris(methylene)phosphonic acid·melamine, nitrilotris(methylene)phosphonic acid·2 melamine, nitrilotris(methylene)phosphonic acid·3 melamine, nitrilotris(methylene)phosphonic acid·4 melamine, nitrilotris(methylene) phosphonic acid·5 melamine, nitrilotris(methylene)phosphonic acid·6 melamine, etc., are listed. At least one of these compounds can be used.

A method for producing the nitrilotris(methylene)-phosphonic acid melamine salt represented by the aforementioned general formula (1) is not specifically limited but conventional method can be used. For example, it may be performed by a method of reacting nitrilotris-(methylene)phosphonic acid represented by the following general formula (2):

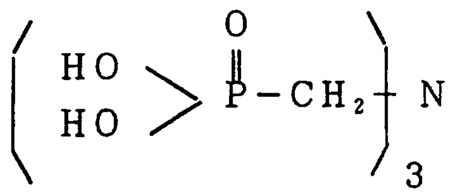

(2)

and a melamoine in water, a mixed solvent of water-acetone, or an aqueous solvent of water-alcohol, etc. at a temperture, genarally, 80 °C or more.

In the reaction for producing the nitrilotris-(methylene)phosphonic acid melamine salt which is an objective of the aforementioned reaction, the ratio of nitrilotris(methylene)phosphonic acid represented by the general formula (2) and a melamine is usually in the range of 1 to 3 moles of the melamine relative to 1 mole of nitrilotris(methylene) phosphonic acid represented by the general formula (2) and a salt thereof. The amount of the melamine used is appropriately controlled based on the amount of the melamine to be introduced into the objective within the aforementioned range.

As the hydrated metallic compound, compounds having a flame retarding function due to endothermic reactions, represented by $M_mO_n \cdot XH_2O$ (M represents a metal, m and n represent an integer of at least 1 determined based on the valence of the metal, and X represents contained water of crystallization), or double salts containing the aforementioned compound, specifically, at least one kind selected from the group consisting of aluminium hydroxide, magnesium hydroxide, basic magnesium carbonate, calcium hydroxide, barium hydroxide, zirconium hydroxide, dawsonite, zinc stannate, zinc borate, aluminum borate, antimony pentaoxide, basic zinc carbonate, cobalt oxide, zirconium oxide, tin oxide, aluminum oxide, titanium oxide, magnesium oxide, calcium silicate, borax, zinc molybdate, zinc phosphate, magnesium phosphate, hydrotalcite, hydrocalumite, kaolin, talc, sericite, pyrophyllite, bentonite, kaolinite, calcium sulfate, zinc sulfate, etc., are listed. These hydrated metallic compounds may be surface treated.

Blending ratio of the hydrated metallic compound is usually 1 to 200 parts by weight, preferably 10 to 100 parts by weight relative to 100 parts by weight of nitrilotris(methylene)phosphonic acid melamine salt.

Furthermore, in the flame retardant composition according to the present invention, a flame-retardant assistant can be concurrently used to enhance the retarding effect. As the flame-retardant assistant, for example, at least one kind selected from the group consisting of metallic oxides, e.g., antimony trioxide, copper oxide, magnesium oxide, zinc oxide, molybdenum oxide, iron oxide, manganese oxide, aluminum oxide, tin oxide, titanium oxide, and nickel oxide, carbonates, e.g., calcium carbonate and barium carbonate, metaborates, e.g., zinc metaborate and barium metaborate, melamine derivatives, e.g., melamine, melamine cyanurate, methylolmeramine, (iso)cyanuric acid, melam, melem, mellon, succinoguanamine, melamine sulfate, acetoguanamine sulfate, melam sulfate, guanylmelamine sulfate, melamine resin, BT resin, cyanuric acid, isocyanuric acid, isocyanuric acid derivatives, melamine isocyanurate, benzoguanamine, and acetoguanamine, guanidine compounds, silicone compounds, and phosphorus base flame retardants, may be listed. Among these, the phosphorus base flame retardants are particularly preferable.

As the phosphorus base flame retardant, for example, at least one kind selected from the group consisting of triethyl phosphate, tricresyl phosphate, triphenyl phosphate, cresylphenyl phosphate, octyldiphenyl phosphate, diethylenephosphoric acid ethyl ester, dihydroxypropylene-phosphoric acid butyl ester, ethylenephosphoric acid disodium ester, methylphosphonate, dimethyl methylphosphonate, diethyl methylphosphonate, ethyl phosphonate, propyl phosphonate, butyl phosphonate, 2-methyl-propyl phosphonate, t-butyl phosphonate, 2,3-dimethylbutyl phosphonate, octyl phosphonate, phenyl phosphonate, dioctylphenyl phosphonate, dimethyl phosphinate, methylethyl phosphinate, methylpropyl phosphinate, diethyl phosphinate, dioctyl phosphinate, phenyl phosphinate, diethylphenyl phosphinate, diphenyl phosphinate, bis(4-methoxyphenyl) phosphinate, red phosphorus, ammonium phosphate, ammonium polyphosphate, melamine phosphate, guanylurea phosphate, melamine polyphosphate, guanidine phosphate, ethylenediamine phosphate, phosphazene, and melamine methylphosphonate, is listed. Among these, red phosphorus, ammonium phosphate, ammonium polyphosphate, melamine phosphate, guanylurea phosphate, melamine polyphosphate, guanidine phosphate are preferably used.

Red phosphorus preferably has its surface modified by organic materials or/and inorganic materials, for example, at least one or more of phenol resins, epoxy resins, ethylene-vinyl acetate copolymers, melamine-formaldehyde polycondensates, and hydroxides and oxides of Mg, Ca, Ti, Al, Co and Zr, may be mentioned, although it is not limited to these.

Blending ratios of these flame-retardant assistants are usually 0.1 to 10% by weight, preferably are 0.5 to 5% by weight in terms of flame retardant compositions.

The flame retardant of the present invention containing nitrilotris(methylene)phosphonic acid melamine salt and hydrated metal compound may preliminary be prepared by a mechanical method imparting a strong sheering force such as wet or dry method so as to achieve a homogeneous mixture having the above ratio of the components, or

alternatively, may be formulated separately.

The flame retardant composition according to the present invention can impart superior flame retardancy to various resins.

Next, a flame-retardant resin composition according to the present invention will be explained.

As a resin which can be used, although not specifically limited, for example, thermosetting resins, e.g., epoxy resins, phenol resins, polyurethane resins, melamine resins, urea resins, aniline resins, furan resins, alkyd resins, xylene resins, unsaturated polyester resins, and diaryl phthalate resins, polybutylene terephthalate resins, polyethylene terephthalate resins, polycarbonates, polyphenylene oxides, polyphenylene ethers, nylon 6, nylon 66, nylon 12, polyacetal, polyethylene, polypropylene, polybutadiene, polyacrylonitrile, polystyrene, polymethylmethacrylate, polyethylene oxides, polytetramethylene oxides, thermoplastic polyurethanes, phenoxy resins, polyamides, ethylene/propylene copolymers, ethylene/1-butene copolymers, ethylene/propylene/non-conjugate diene copolymers, ethylene/ethyl acrylate copolymers, ethylene/glycidyl methacrylate copolymers, ethylene/vinyl acetate/glycidyl methacrylate copolymers, ethylene/propylene-g-maleic anhydride copolymers, polyester polyether elastomer, polytetrafluoroethylene, and denatured materials thereof, are listed. These resins may be homopolymers, copolymers, or mixtures of at least two kinds.

Herein, thermosetting resin means a synthetic resin being cured to become semipermanently insoluble and infusible, wherein chemical changes due to the action of heat, catalysts, ultraviolet rays, etc., occur to develop cross-linking structure so as to increase molecular weight and to form a three-dimensional network structure. Thermoplastic resin means a resin that exhibits fluidity by heating so that shaping thereof is possible.

Blending ratios of the flame retardant compositions into various resins are 1 to 20 parts by weight, preferably 2 to 15 parts by weight in terms of phosphorus relative to 100 parts by weight of the resin. This is due to the fact that when the blending ratio is less than 1 part by weight, flame retarding effects are not sufficiently exhibited and on the other hand, when it is more than 20 parts by weight, it is not preferable since the mechanical properties of molded materials are likely to be degraded even though flame retarding effects are increased.

Furthermore, concurrent use with common additives, for example, antioxidants of phosphorus base, sulfur base, hindered phenol base, etc., thermal stabilizers, ultraviolet absorbents, lubricants, release agents, dyes, colorants containing pigments, cross-linking agents, softeners, and dispersing agents, as another component blended into resins, is possible.

When necessary, stiffness of the resin can be increased to a great degree by addition of fibrous and/or granular fillers. As such a filler, for example, glass fibers, carbon fibers, metallic fibers, aramid resins, asbestos, potassium titanate whiskers, wollastonite, glass flakes, glass beads, talc, mica, clay, calcium carbonate, calcium silicate, barium sulfate, titanium oxide, fused silica, crystalline silica, magnesia, and aluminum oxide, are listed.

The flame retardant composition according to the present invention can be contained in various resins by normal publicly known methods. For example, in thermosetting resins, the method of concurrently blending the flame retardant composition of the present invention with a thermosetting resin and other additives, and the method of blending a thermosetting resin with a kind of resin components blended beforehand with the flame retardant composition of the present invention, may be mentioned. In thermoplastic resins, the method of fusing and blending the flame retardant composition of the present invention with an extruder, or the method of uniformly and mechanically blending granular materials all together, and thereafter molding by an extruder concurrently with blending, etc., are listed.

The flame retardant composition according to the present invention does not generate a halide gas and irritating odor during combustion while it maintains the inherent mechanical properties of the resin. Therefore, as a very safe plastic material, the flame retardant composition can be used for a broad use of purposes, for example, electric components, e.g., semiconductor sealing materials, laminated sheets, connectors, switches, case members, transformer members, and coil bobbins, building materials, transportation equipment, e.g., automobiles, packages, and housefurnishings.

## EXAMPLES

The present invention will be explained below in detail using examples, although the present invention is not limited to these.

<Preparation of nitrilotris(methylene)phosphonic acid melamine salt>

Sample A: nitrilotris(methylene)phosphonic acid-6 melamine salt

13 L of water and 807.43 g (1.35 mol) of nitrilotris-(methylene)phosphonic acid (hereafter abbreviated as NTP) (50% aqueous solution) were put in 18 L stainless container and were agitated. After heated to 80°C,959.48 g (7.68 mol) of melamine was gradually added while keeping agitation. After completion of melamine addition, agitation was continued until the pH of the reaction solution became stable (ca. 4.5) at 80°C. Then, the resulting solution was

centrifugally filtered to produce white crystals. These crystals were dried at 110°C for 24 hours, and were pulverized by a mixer to produce 1144.53 g of objective material. The yield was 84.3% (yield relative to NTP).
According to an elemental analysis for C, H and N, following results were obtained respectively: C: 23.41%; H: 4.53%; and N: 46.63%.

Sample B: nitrilotris(methylene)phosphonic acid-4 melamine salt

15 L of water and 897.0 g (1.49 mol) of NTP (50% aqueous solution) were put in 18 L stainless container and were agitated. After heated to 80°C, 751.6 g (5.96 mol) of melamine was gradually added while keeping agitation. After completion of melamine addition, agitation was continued until the pH of the reaction solution became stable (ca. 4.2) at 80°C. Then, the resulting solution was centrifugally filtered to produce white crystals. These crystals were dried at 110°C for 24 hours, and were pulverized by a mixer to produce 1144.06 g of objective material. The yield was 95.2% (yield relative to NTP).
According to an elemental analysis for C, H and N, following results were obtained respectively: C: 21.52%; H: 4.41%; and N: 41.82%.

Sample C: nitrilotris(methylene)phosphonic acid·3 melamine salt

15 L of water and 1802.0 g (3.01 mol) of NTP (50% aqueous solution) were put in 18 L stainless container and were agitated. After heated to 80°C, 1140.0 g (9.03 mol) of melamine was gradually added while keeping agitation. After completion of melamine addition, agitation was continued until the pH of the reaction solution became stable (ca. 1.5) at 80°C. Then, the resulting solution was centrifugally filtered to produce white crystals. These crystals were dried at 110°C for 24 hours, and were pulverized by a mixer to produce 1909.66 g of objective material. The yield was 93.9% (yield relative to NTP).
According to an elemental analysis for C, H and N, following results were obtained respectively: C: 20.84%; H: 4.41%; and N: 38.49%.

Sample D: nitrilotris(methylene)phosphonic acid-2 melamine salt

10 L of water and 1802.0 g (3.00 mol) of NTP (50% aqueous solution) were put in 18 L stainless container and were agitated. After heated to 80°C, 762.0 g (6.00 mol) of melamine was gradually added while keeping agitation. After completion of melamine addition, agitation was continued until the pH of the reaction solution became stable (ca. 1.5) at 80°C. Then, the resulting solution was centrifugally filtered to produce white crystals. These crystals were dried at 110°C for 24 hours, and were pulverized by a mixer to produce 1494.5 g of objective material. The yield was 90.3% (yield relative to NTP).
According to an elemental analysis for C, H and N, following results were obtained respectively: C: 19.79%; H: 4.38%; and N: 32.02%.

EXAMPLES 1 to 4 and COMPARATIVE EXAMPLES 1 to 5

Various additives were added to ethylene ethylacrylate resin in the blending ratios (parts by weight) as shown in Table 1, and the resulting resin was kneaded by heated roll set at 120 to 130°C for 5 to 10 minutes. Sheets 3 mm in thickness were formed using a heating press at a molding pressure of 150 $kg/cm^2$, at a pressing time of 5 minutes, and at a die temperature of 115°C, and furthermore, test pieces 125 mm in length and 13 mm in width were formed.

<Flame retardancy test>

In flame retardancy tests, resins processed into 125 mm in length x 13 mm in width x 3 mm in thick sheets, prepared as described above, were tested according to vertical combustion-firing test of materials classified under UL94 (94V-0, 94V-1, and 94V-2). The results thereof are shown in Table 3. Pass or fail criteria in UL94 are as shown in Table 2.

Table 1

| (part by weight) | | | | | | | | | |
|---|---|---|---|---|---|---|---|---|---|
| | Example | | | | Comparable Example | | | | |
| | 1 | 2 | 3 | 4 | 1 | 2 | 3 | 4 | 5 |
| Ethylene/ethyl acrylate resin | 100 | 100 | 100 | 100 | 100 | 100 | 100 | 100 | 100 |
| $Mg(OH)_2$ | 80 | 80 | 80 | 80 | | | | | 80 |
| Sample A (6 melamine) (P content) | 120 (10) | | | | 120 (10) | | | | |
| Sample B (4 melamine) (Pcontent) | | 87 (10) | | | | 87 (10) | | | |
| Sample C (3 melamine) (Pcontent) | | | 72 (10) | | | | 72 (10) | | |
| Sample D (2 melamine) (Pcontent) | | | | 63 (10) | | | | 63 (10) | |

Table 2

| | | 9 4 V - O | 9 4 V - 1 | 9 4 V - 2 |
|---|---|---|---|---|
| Test 1 | Time of remaining flame | ≦1 0 sec | ≦3 0 sec | ≦3 0 sec |
| Test 2 | Sum of time of remaining flame for 10 times ignition | ≦5 0 sec | ≦250sec | ≦250sec |
| Test 3 | Presence of remaining flame or ember which reached a cramp | none | none | none |
| Test 4 | Presence of flame drop which ignite cotton 300 mm below | none | none | none |
| Test 5 | Time of remaining ember after removal of second igniter | ≦3 0 sec | ≦6 0 sec | ≦6 0 sec |

Table 3

| | Example | | | | Comparative Example | | | | |
|---|---|---|---|---|---|---|---|---|---|
| | 1 | 2 | 3 | 4 | 1 | 2 | 3 | 4 | 5 |
| Test 1 (sec) | 0 | 0 | 0 | 0 | >30 | >30 | 0 | >30 | >30 |
| Test 2 (sec) | 3 | 8 | 0 | 19 | >250 | >250 | 142 | >250 | >250 |
| Test 3 | none | none | none | none | Yes | Yes | none | Yes | Yes |
| Test 4 | none | none | none | none | Yes | Yes | Yes | Yes | Yes |
| Test 5 (sec) | 0-3 | 0-3 | 0 | 0-10 | - | - | 0-37 | - | - |
| Pass or Failure of U L 9 4 | v-0 | v-0 | v-0 | v-1 | Failure | Failure | V-2 | Failure | Failure |

From the results of Table 3, it is seen that a resin composition comprising the flame retardant composition of the present invention shows a superior flame retardancy to a resin composition comprising a melamine salt of nitrilotris (methylene)phosphonic acid alone.

EXAMPLES 5 to 8 and COMPARATIVE EXAMPLES 6 and 7

Various additives were blended to novolac resin, prepared with the ratio of formaldehyde/phenol being 0.9 on a mole basis, in the blending ratios shown in Table 4, and the resulting resin was kneaded by heated roll set at 80 to 90°C for 5 minutes. After pulverization, molded materials having predetermined shapes were formed using a universal press at a molding pressure of 250 kg/cm$^2$, for a pressing time of 60 seconds, and at a die temperature of 150°C.
Flame retardancy tests were evaluated in a manner similar to that in EXAMPLES 1 to 4. Furthermore, the presence or absence of phosphine gas during molding, and surface properties of the molded materials are shown in

Table 5.

Red phosphorus was used after the surface thereof was modified by a phenol resin.

Table 4

| (part by weight) | | | | | | |
|---|---|---|---|---|---|---|
| | Example | | | | Comparative Example | |
| | 5 | 6 | 7 | 8 | 6 | 7 |
| Novolac resin | 100 | 100 | 100 | 100 | 100 | 100 |
| Hexamethylen e tetramine | 15 | 15 | 15 | 15 | 15 | 15 |
| $Al(OH)_3$ | 80 | 80 | 80 | 80 | 80 | 80 |
| Sample A ( P content) | 120 (10) | | | | | |
| Sample B ( P content) | | 87 (10) | | | | |
| Sample C (P content) | | | 72 (10) | | | |
| Sample D ( P content) | | | | 63 (10) | | |
| Red phosphorus | | | | | 10 | |
| Ca borate | | | | | | 10 |

Table 5

| | U L 9 4 | Surface | Generation of $PH_3$ during molding |
|---|---|---|---|
| Example 5 | V - 0 | good | none |
| Example 6 | V - 0 | good | none |
| Example 7 | V - 0 | good | none |
| Example 8 | V - 0 | good | none |
| Comp. Exam.6 | V - 0 | good | yes |
| Comp. Exam.7 | V - 0 | rough | none |

(Note 1) Generation of phosphine gas ($PH_3$) was determined by a detector tube method.

None: less than 0.15 ppm

Yes: 0.15 ppm or more

(Note 2) Surface property was determined by touch.

From the results as shown in Table 5, the phenol resins containing the flame retardant compositions according to the present invention are superior in flame retardancy, the surfaces of the molded materials are smooth, and furthermore, no generation of phosphine gas was recognized during molding. On the other hand, although, the one containing calcium borate also exhibited superior flame retardancy, the surface of the molded material was rough. The one containing red phosphorus also exhibited superior flame retardancy, but the generation of phosphine gas was recognized during processing. EXAMPLES 9 to 12 and COMPARATIVE EXAMPLES 8 and 9

Various additives were blended to bisphenol A diglycidylether type epoxy resins in the blending ratios as shown in Table 6. These were cast into molds having predetermined shapes and were cured at 105°C for 10 hours.

Flammability of each sample based on UL94 and generation or no generation of phosphine gas during molding were determined. The results thereof are shown in Table 7. Red phosphorus was used after the surface thereof was modified by a phenol resin.

Table 6

| (part by weight) | | | | | | |
|---|---|---|---|---|---|---|
| | Example | | | | Comp. Example | |
| | 9 | 10 | 11 | 12 | 8 | 9 |
| Epoxy resin | 100 | 100 | 100 | 100 | 100 | 100 |
| TMHPA* | 80 | 80 | 80 | 80 | 80 | 80 |
| Benzyldimethyl amine | 1 | 1 | 1 | 1 | 1 | 1 |
| $Mg(OH)_2$ | 100 | 100 | 100 | 100 | | |
| Sample A ( P content) | 120 (10) | | | | | |
| Sample B ( P content) | | 87 (10) | | | | |
| Sample C (P content) | | | 72 (10) | | | |
| Sample D ( P content) | | | | 63 (10) | | |
| Hydrated alumina | | | | | 80 | |
| Red phosphorus | | | | | | 10 |

(Note) TMHPA: tetramethylhexahydrophthalic anhydride

Table 7

| | U L 9 4 | Generation of $PH_3$ during molding |
|---|---|---|
| Example 9 | V - 0 | none |
| Example 10 | V - 0 | none |
| Example 11 | V - 0 | none |
| Example 12 | V - 0 | none |
| Comp. Exam.8 | failure | none |
| Comp. Exam.9 | failure | yes |

EXAMPLES 13 to 21

Various additives were blended to various resins as shown in Table 8. Test pieces for a tensile test according to ATSM D-638 were prepared by a 30 mm diameter extruder and injection molding. Then, strength and elongation were measured according to JIS K-7113.

Test pieces for evaluation of flame retardancy based on UL94 were prepared in a manner similar to that in the above description, and flammability was measured. The results thereof are shown in Table 9.

Red phosphorus was used after the surface thereof was modified by aluminum hydroxide and titanium hydroxide.

Conditions for melt-extrusion, pellet drying, and injection molding of each resin are described below.

- Polybutylene terephthalate (hereafter abbreviated as PBT)
  extrusion; 250 to 290°C / 150 rpm
  drying; 110°C / 12 hours
  molding; 250 to 290°C / die 80°C
- Nylon 6
  extrusion; 250 to 300°C / 150 rpm
  drying; 100°C / 24 hours

molding; 250 to 300°C / die 80°C

- Polycarbonate
  extrusion; 260 to 320°C / 75 rpm
  drying; 120°C / 12 hours
  molding; 260 to 320°C / die 110°C

Table 8

| (part by weight) | | | | | | |
|---|---|---|---|---|---|---|
| | Thermoplastic resin | | phosphonic acid sample | | $Mg(OH)_2$ | Red phosphorus |
| Example | kind | part | kind | part (P content) | part | part |
| 13 | PBT | 100 | A | 120 (10) | 80 | |
| 14 | PBT | 100 | B | 87 (10) | 80 | |
| 15 | PBT | 100 | B | 87 (10) | 80 | 1 |
| 16 | Nylon 6 | 100 | C | 72 (10) | 80 | |
| 17 | Nylon 6 | 100 | D | 63 (10) | 80 | |
| 18 | Nylon 6 | 100 | D | 63 (10) | 80 | 1 |
| 19 | Polycarbonate | 100 | A | 120 (10) | 80 | |
| 20 | Polycarbonate | 100 | B | 87 (10) | 80 | |
| 21 | Polycarbonate | 100 | C | 72 (10) | 80 | 1 |

Table 9

| Example | U L 9 4 | Mechanical roperties | |
|---|---|---|---|
| | | Strength ($kgf/cm^2$) | Elongation (%) |
| 13 | V-1 | 541 | 63 |
| 14 | V-1 | 543 | 64 |
| 15 | V-0 | 535 | 63 |
| 16 | V-1 | 774 | 155 |
| 17 | V-1 | 782 | 160 |
| 18 | V-0 | 771 | 162 |
| 19 | V-1 | 653 | 118 |
| 20 | V-1 | 651 | 117 |
| 21 | V-0 | 652 | 114 |

EXAMPLES 22 to 25 and COMPARATIVE EXAMPLES 11 and 14

Various additives were added to polypropylene resin (hereafter abbreviated as PP) in the blending ratios as

shown in Table 10, and the resulting resin was kneaded by heated roll set at 230°C for 5 minutes. Melt-extrusion was performed at a screw revolution of 87 rpm. Then, test pieces based on UL94 were prepared by injection molding (cylinder temperature: 230°C, die temperature 50°C).

As tin oxide hydrate, $SnO \cdot H_2O$ was used, and as zinc borate, $2ZnO \cdot 3B_2O_3 \cdot 3.5H_2O$ was used.

Table 10

| (Part by weight) | | | | | | | | | |
|---|---|---|---|---|---|---|---|---|---|
| | Example | | | | Comp. Example | | | | |
| | 22 | 23 | 24 | 25 | 10 | 11 | 12 | 13 | 14 |
| P P resin | 100 | 100 | 100 | 100 | 100 | 100 | 100 | 100 | 100 |
| Sample A (P content) | 120 (10) | | 120 (10) | 120 (10) | 120 (10) | | | | |
| Sample B (P content) | | 87 (10) | | | | 87 (10) | | | |
| $Mg(OH)_2$ | 80 | | | | | | 80 | | |
| Hydrated SnO | | 80 | | | | | | 80 | |
| Zn-borate | | | 20 | 20 | | | | | 80 |
| Ammonium polyphosphate | | | | 1 | | | | | |
| Pass or Failure of UL94 | v-o | v-o | v-1 | v-o | Failure | Failure | Failure | Failure | Failure |

EXAMPLES 26 to 29 and COMPARATIVE EXAMPLES 15 and 19

Various additives were added to a mixture of poly(2,6-dimethyl-1,4-phenylene) oxide and polystyrene (hereafter abbreviated as PPO) in blending ratios as shown in Table 11, and the resulting mixture was kneaded by heated roll set at 240 to 310°C for 5 minutes. Melting extrusion was performed at a screw revolution of 40 to 100 rpm. The resulting pellets were dried at 110°C for 4 hours, and thereafter, test pieces based on UL94 were prepared by injection molding (cylinder temperature: 240 to 310°C, die temperature 90 °C).

As borax, $Na_2O \cdot B_2O_5 \cdot 5H_2O$ was used, and as hydrotalcite, $Mg_6Al_{12}(OH)_{16}CO_3 \cdot 4H_2O$ was used.

Table 11

| (Part by weight) | | | | | | | | | |
|---|---|---|---|---|---|---|---|---|---|
| | Example | | | | Comp. Example | | | | |
| | 26 | 27 | 28 | 29 | 15 | 16 | 17 | 18 | 19 |
| P P o resin | 100 | 100 | 100 | 100 | 100 | 100 | 100 | 100 | 100 |
| Sample A (P content) | 120 (10) | | 120 (10) | 120 (10) | 120 (10) | | | | |
| Sample B (P content) | | 87 (10) | | | | 87 (10) | | | |
| $Mg(OH)_2$ | 80 | | | | | | 80 | | |
| Borax | | 80 | | | | | | 80 | |
| hydrotalcite | | | 20 | 20 | | | | | 20 |
| Melamine polyphosphate | | | | 1 | | | | | |
| Pass or Failure of U L 9 4 | V-0 | V-0 | V-1 | V-0 | Failure | Failure | Failure | Failure | Failure |

Industrial Applicability

As described above, since the flame retardant composition according to the present invention can impart superior flame retardancy to various resins while maintaining the inherent mechanical properties of the resins, has a

smoke suppression properties, and emits no irritating odor, the composition has great value when used as a non-halogen base flame retardant.

## Claims

1. A flame retardant composition **characterized by** containing a nitrilotris(methylene)phosphonic acid melamine salt represented by the following general formula (1):

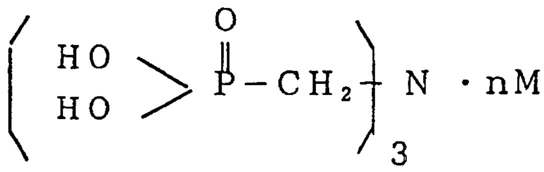

(1)

(wherein M represents a melamine and n is an integer from 1 to 6), and hydrated metal compound.

2. A flame retardant composition according to Claim 1, further comprising a flame-retardant assistant.

3. A flame retardant composition according to Claim 2, wherein said flame-retardant assistant is a phosphorus base flame retardant.

4. A flame retardant composition according to Claim 2 or 3, wherein said phosphorus base flame retardant is at least one kind selected from the group consisting of red phosphorus, ammonium phosphate, ammonium polyphosphate, melamine phosphate, guanylurea phosphate, melamine polyphosphate, and guanidine phosphate.

5. A flame-retardant resin composition, comprising a flame retardant composition according to one of Claims 1 to 4.

## Patentansprüche

1. Flammhemmende Zusammensetzung, **dadurch gekennzeichnet, dass** sie ein Nitrilotris-(methylen)phosphonsäure-Melaminsalz der folgenden allgemeinen Formel (1) :

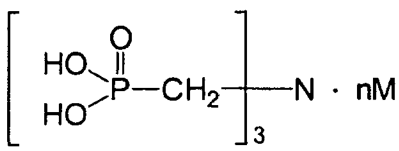

(1)

(worin M ein Melamin ist und n ist eine ganze Zahl von 1-6) und eine hydratisierte Metallverbindung enthält.

2. Flammhemmende Zusammensetzung gemäss Anspruch 1, die ferner ein flammhemmendes Hilfsmittel umfasst.

3. Flammhemmende Zusammensetzung gemäss Anspruch 2, worin das flammhemmende Hilfsmittel ein Flammhemmer auf Phosphorbasis ist.

4. Flammhemmende Zusammensetzung gemäss Anspruch 2 oder 3, worin der Flammhemmer auf Phosphorbasis mindestens einer ist, ausgewählt aus rotem Phosphor, Ammoniumphosphat, Ammoniumpolyphosphat, Melaminphosphat, Guanylharnstoffphosphat, Melaminpolyphosphat und Guanidinphosphat.

5. Flammhemmende Harzzusammensetzung, die eine flammhemmende Zusammensetzung gemäss mindestens einem der Ansprüche 1 bis 4 umfasst.

## Revendications

1. Composition ignifuge, **caractérisée par le fait qu'**elle contient un sel de mélamine de l'acide nitrilotris(méthylène) phosphonique représenté par la formule (1) :

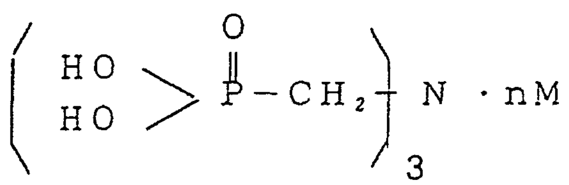

(1)

(dans laquelle M représente une mélanine et n un nombre entier de 1 à 6), et un composé métallique hydraté.

2. Composition ignifuge selon la revendication 1, comprenant en outre un agent auxiliaire ignifuge.

3. Composition ignifuge selon la revendication 2, dans laquelle ledit agent auxiliaire ignifuge est un agent ignifuge à base de phosphore.

4. Composition ignifuge selon la revendication 2 ou 3, dans laquelle ledit ignifuge à base de phosphore est au moins un type choisi dans le groupe consistant en phosphore rouge, phosphate d'ammonium, polyphosphate d'ammonium, phosphate de mélamine, phosphate de guanylurée, polyphosphate de mélamine et phosphate de guanidine.

5. Composition de résine ignifuge, comprenant une composition ignifuge selon l'une des revendications 1 à 4.